(19) **Europäisches Patentamt / European Patent Office / Office européen des brevets**

(11) **EP 2 537 686 B1**

(12) **EUROPEAN PATENT SPECIFICATION**

(45) Date of publication and mention
of the grant of the patent:
**29.03.2017 Bulletin 2017/13**

(21) Application number: **11742374.9**

(22) Date of filing: **15.02.2011**

(51) Int Cl.:
*B60C 9/22* $^{(2006.01)}$     *B60C 9/20* $^{(2006.01)}$
*B60C 9/28* $^{(2006.01)}$     *B60C 9/00* $^{(2006.01)}$

(86) International application number:
**PCT/JP2011/053184**

(87) International publication number:
**WO 2011/099635 (18.08.2011 Gazette 2011/33)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2010 JP 2010030588**

(43) Date of publication of application:
**26.12.2012 Bulletin 2012/52**

(73) Proprietor: **Bridgestone Corporation
Tokyo 104-8340 (JP)**

(72) Inventor: **HAYASHI Shintaro
Kodaira-shi
Tokyo 187-0031 (JP)**

(74) Representative: **Oxley, Robin John George et al
Marks & Clerk LLP
90 Long Acre
London WC2E 9RA (GB)**

(56) References cited:
**WO-A1-03/055697**     **JP-A- 8 104 106**
**JP-A- 11 078 410**     **JP-U- 62 105 805**
**US-B2- 6 609 552**

**Description**

Technical Field

The present invention relates to a pneumatic tire (hereinafter, also simply referred to as "tire"), and more particularly, to a pneumatic tire which may have a reduced weight and increase fuel efficiency while securing durability.

Background Art

Recently, needs for reducing the weight of tires in order to improve fuel efficiency of automobiles are ever-increasing. Since reduction of emissions of $CO_2$ is demanded through the overall lifecycle of the product from the production of the product to the use of the product and disposal of the product, the reduction of the raw material (weight reduction), improvement of manufacturability (manufacture energy reduction) and reduction of rolling resistance (increase in fuel efficiency) are needed.

For such needs, for example, patent documents 1 to 5 discloses, as a tire whose manufacture is easy due to its simple structure and which is lightweight and has a small rolling resistance, a pneumatic radial tire comprising one oblique steel belt layer, and at least one circumferential direction steel belt layer which is positioned on the oblique steel belt layer and on which a plurality of cords are arrayed substantially in parallel with respect to the tire circumferential direction.

Techniques other than the above have been developed in which metal monofilaments are not twisted to be used for cords for a belt from the viewpoint of reducing weight in belt layers, and a variety of such techniques have been proposed. For example, patent document 6 proposes a pneumatic radial tire comprising a belt in which a bundle of four or five metal filaments (monofilaments) arranged and oriented in the width direction of a belt without twisting each other is embedded as a unit in rubber for the purpose of increasing fuel efficiency and improving the riding comfort. Patent document 7 proposes a pneumatic radial tire composed of three belt plies in which metal monofilaments of a belt layer are arranged in the belt ply width direction under a predetermined condition and embedded in a covering rubber in order to meet the needs of reducing the weight of tires and in order to solve problems such as decrease in durability due to breakage of a metal wire. Further, belt structures other than the above in which metal monofilament cords are arranged in parallel are disclosed in patent documents 8 and 9.

Related Art Documents

Patent Documents

Patent document 1: Japanese Unexamined Patent Application Publication No. 2002-019414 (claims and the like)
Patent document 2: Japanese Patent No. 3071808 (Japanese Unexamined Patent Application Publication No. 4-78602, claims and the like)
Patent document 3: Japanese Unexamined Patent Application Publication No. 2001-206010 (claims and the like)
Patent document 4: Japanese Patent No. 4054072 (Japanese Unexamined Patent Application Publication No. 8-318706, claims and the like)
Patent document 5: Japanese Unexamined Patent Application Publication No. 2007-161026 (claims and the like)
Patent document 6: Japanese Patent No. 2713806 (Japanese Unexamined Patent Application Publication No. 4-95505, Examples)
Patent document 7: Japanese Unexamined Patent Application Publication No. 2002-283809 (claims and the like)
Patent document 8: Japanese Unexamined Patent Application Publication No. 2005-349999 (claims and the like)
Patent document 9: Japanese Unexamined Patent Application Publication No. 2007-302203 (claims and the like)

Another relevant pneumatic tire is known from US 6 609 552 B2, which discloses a tire comprising as a skeleton, a carcass extending toroidally between a pair of bead cores individually embedded in a left-and-right pair of bead portions, and is provided with an oblique steel belt layer which is arranged on the periphery side of a crown portion of the carcass and in which a plurality of cords extending obliquely with respect to the tire circumferential direction are arrayed, and a circumferential direction belt layer which is arranged on the periphery side of the oblique steel belt layer and in which a plurality of cords are arrayed substantially in parallel with the tire circumferential direction, wherein the cords of the oblique steel belt layer are made of monofilament steel cords and the aromatic polyamide cords of the circumferential belt layer are placed side by side in a belt width direction in a plurality of twisted filaments.

Summary of the Invention

Problems to be Solved by the Invention

Although a tire which can have a reduced weight and increase fuel efficiency by applying, to an oblique steel belt layer and a circumferential direction steel belt layer described in patent documents 1 to 5, a technique using metal monofilaments described in patent documents 6 to 9 without twisting each other as a cord for a belt can be considered, the above-mentioned structures cannot be simply applied to the tire. This is because, in the belt structure described in patent documents 6 to 9, untwisted steel filaments are arranged in parallel and are susceptible to deformation applied vertically to the parallel steel filaments. For this reason, the circumferential direction belt tends to undergo buckling deformation when subjected to compression deformation during contacting the ground of the tire, and the durability of the tire is not necessarily sufficient.

The weight reduction of a tire and increase in fuel efficiency become possible by applying metal monofilaments to belt layers, securing the gauge between the metal monofilaments and appropriately designing the gauge between the belt layers as in the techniques described in patent documents 6 to 9. In order to attain further weight reduction and increase in fuel efficiency, however, it is necessary to reduce the metal monofilament diameter of a belt layer or to reduce the end count density. In this case, there arises a problem that the belt rigidity in the tire circumferential direction decreases and the tire durability decreases.

Accordingly, an object of the present invention is to provide a pneumatic tire which can have a reduced weight and increase fuel efficiency while securing durability.

Means for Solving the Problems

In order to solve the above-mentioned problems, the present inventor intensively studied to discover that the above-mentioned problems can be solved by employing the constitution below as the structure of a belt, thereby completing the present invention.

That is, the pneumatic tire of the present invention is a pneumatic tire which comprises, as a skeleton, a carcass extending toroidally between a pair of bead cores individually embedded in a left-and-right pair of bead portions, and is provided with an oblique steel belt layer which is arranged on the periphery side of a crown portion of the carcass and in which a plurality of cords extending obliquely with respect to the tire circumferential direction are arrayed, and a circumferential direction belt layer which is arranged on the periphery side of the oblique steel belt layer and in which a plurality of cords are arrayed substantially in parallel with the tire circumferential direction, wherein the cords of the oblique steel belt layer are placed side by side in a belt width direction in a unit of a bundle of a plurality of parallel steel filaments and the cords of the circumferential steel belt layer are placed side by side in a belt width direction in a plurality of twisted filaments.

In the present invention, it is preferred that the wire diameter D1 of a filament constituting the cord of the circumferential direction belt layer and the wire diameter D2 of a steel filament constituting the cord of the oblique steel belt layer satisfy the relationship represented by the following expression (1):

$$D1 < D2 \quad (1).$$

It is preferred that the cord of the circumferential direction belt layer be composed of 5 to 15 filaments. Further, it is preferred that the interval A1 between the cords of the oblique steel belt layer and the interval A2 between the cords of the circumferential direction belt layer satisfy the relationship represented by the following expression (2):

$$A1 > A2 \quad (2).$$

Still further, it is preferred that the inclination angle of the oblique steel belt layer be 40 to 60° with respect to the circumferential direction. Still further, it is preferred that the width B1 of the circumferential direction belt layer in the belt width direction and the width B2 of the oblique steel belt layer in the belt width direction satisfy the relationship represented by the following expression (3):

$$0.8 \times B2 < B1 < 0.95 \times B2 \quad (3).$$

Still further, it is preferred that the cord of the oblique steel belt layer be composed of 3 to 6 steel filaments.

Effects of the Invention

By the present invention, a pneumatic tire which can have a reduced weight and increase fuel efficiency while securing durability can be provided.

Brief Description of the Drawings

Fig. 1 is a half sectional view of a pneumatic tire according to one embodiment of the present invention.
Fig. 2 is a plan view of the reinforcing structure of a tread portion of a pneumatic tire of the present invention
Fig. 3 is an enlarged cross-sectional view of a tread portion of a pneumatic tire of the present invention.
Fig. 4 is a schematic cross-sectional view illustrating the structure of the cord of a circumferential direction belt layer which can be preferably used in the present invention.

Modes for Carrying out the Present Invention

Preferred embodiments of the present invention will now be described in detail with reference to the drawings.

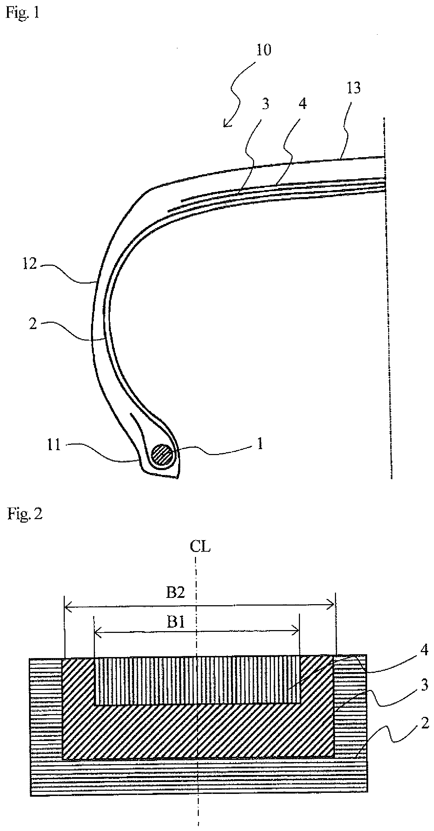

Fig. 1 is a half sectional view of a pneumatic tire according to one embodiment of the present invention. The illustrated pneumatic tire 10 comprises, as a skeleton, a carcass 2 extending toroidally between a pair of bead cores 1 individually embedded in a left-and-right pair of bead portions 11, and is provided with an oblique steel belt layer 3 which is arranged on the periphery side of a crown portion of the carcass 2 and in which a plurality of cords extending obliquely with respect to the tire circumferential direction are arrayed, and a circumferential direction belt layer 4 which is arranged on the periphery side of the oblique steel belt layer 3 and in which a plurality of cords are arrayed substantially in parallel with the tire circumferential direction. Fig. 2 illustrates the extracted reinforcing structure of a tread portion 13 in the pneumatic tire of the present invention. By using a reinforcing structure composed of the oblique steel belt layer 3 and the circumferential direction belt layer 4, a conventional belt reinforcing layer becomes needless. By employing two layers of the oblique steel belt layer 3 and the circumferential direction belt layer 4, it becomes possible to further reduce considerably the weight of the tire. Further, since the belt structure becomes simplified, the fuel efficiency can be increased.

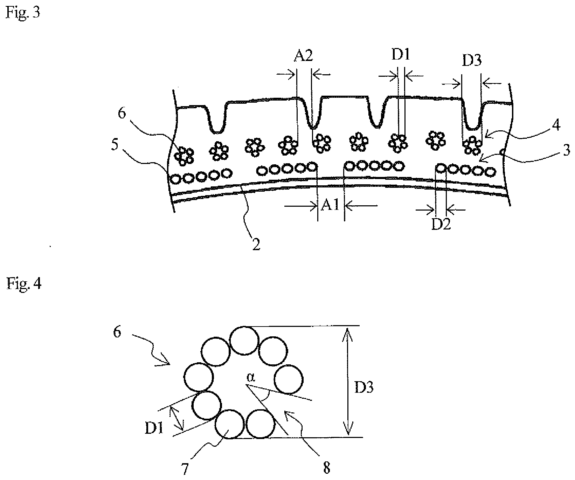

Fig. 3 is an enlarged cross-sectional view of the tread portion 13 of a pneumatic tire of the present invention. As illustrated, in the present invention, it is important that the cords 5 of the oblique steel belt layer 3 be placed side by side in a belt width direction in a unit of a bundle of a plurality of (five in the illustrated example) parallel steel filaments and the cords 6 of the circumferential belt layer 4 be placed side by side in a belt width direction in a plurality of (five in the illustrated example) twisted filaments. By placing the cords 5 of the oblique steel belt layer 3 side by side in the belt width direction in a unit of a bundle of a plurality of parallel steel filaments, the thickness of the coating rubber gauge of the oblique steel belt layer 3 can be reduced. As a result, it becomes possible to further reduce the weight of the tire. In the present invention, the end count of the cords 5 of the oblique steel belt layer 3 is preferably 15 to 30 bundles /50 mm in view of the reinforcing properties or the like.
In the present invention, a concrete structure or the like of the cord 6 of the circumferential direction belt layer 4 is not particularly limited as long as the cord is composed of a plurality of twisted filaments. It is necessary for the circumferential direction belt layer 4 to expand and contract in accordance with the deformation due to the inner pressure growth or the load. If the cord 6 of the circumferential direction belt layer 4 cannot expand or contract, the filament may break due to the compression. For this reason, the cord 6 of the circumferential direction belt layer 4 needs to be a twisted cord. From the viewpoint of manufacturability or durability of the twisted cord, the cord 6 of the circumferential direction belt layer 4 is preferably 5 to 15 filaments. It is preferred that the cord 6 of the circumferential direction belt layer 4 be preferably composed of a plurality of twisted steel filaments having a tensile strength of 2700 N/mm$^2$ or higher and that the cross-sectional shape of the cord 6 of the circumferential direction belt layer 4 in the cross-section in the tire width direction as illustrated in Fig. 4 demonstrate a C-shape having an opening 8 at a part between the steel filaments 7.
As mentioned above, by using the twisted cord 6 with a cross-sectional shape having a gap at a part between the steel filaments 7 for the circumferential direction belt layer 4, the deformation tolerance of the belt cord against the compression deformation and the tensile deformation becomes high, whereby a hoop effect can be generated without buckling of the belt cord even in a state where compression is loaded in the tire circumferential direction during contacting the ground of the tire. In the case of a cord not having a gap between the steel filaments 7, since a deformation margin of the cord during forming (shaping) a tire is small, forming failures such as separation on the belt joint area are highly concerned. For this reason, it is necessary that the forming of a tire is performed by a cord in which the number of filaments is reduced and whose tension is reduced, which reduces the durability of the tire. On the other hand, since the cord illustrated in Fig. 4 has a high deformation tolerance, the formation of a tire without reducing the number of filaments is possible, and the manufacture of a tire without decreasing the durability of the tire is possible. Accordingly, by employing the above-mentioned structure of the cord of the circumferential direction belt layer 4, a pneumatic tire can be obtained which is hard to break during compression, has a good initial elongation and has a good tensile strength and manufacturability.

In the present invention, the central angle $\alpha$ of the cord of the above-mentioned opening 8 is preferably 30 to 100°. When the central angle $\alpha$ of the cord of the opening 8 is too small or the opening 8 is too narrow, the initial elongation may decrease. On the other hand, when the central angle $\alpha$ of the cord of the opening 8 is too large or the opening 8 is too wide, the twisted cord is easy to break and the durability of the tire may decrease.

Further, in the present invention, the diameter D3 of the cord 6 of the circumferential direction belt layer 4 is preferably 4 to 8 times the wire diameter D1 of the steel filament 7. In order to inhibit the breakage of a cord during compression of the cord and to secure the initial elongation, it is necessary to softly twist the steel filaments 7 such that a gap is left between the steel filaments 7 not twisting the steel filament 7 tightly. Actually, rubber is filled in this gap. When the diameter D3 of the above-mentioned cord 6 is too small or when the steel filaments 7 are twisted too tightly, the cord is easy to break by compression and the initial elongation decreases. On the other hand, when the diameter D3 of the above-mentioned cord 6 is too large or when the steel filaments 7 are twisted too softly, the steel filaments 7 are easy to be separated and the tensile strength of the cord decrease.

Since the circumferential direction belt layer 4 is generally formed by helical winding a strip-shaped belt member spirally in the tire circumferential direction, the circumferential direction belt layer 4 actually has some inclination angle with respect to the tire equator line. In the present invention, the end count of the cord 6 of the circumferential direction belt layer 4 is preferably 25 to 45 /50 mm in view of reinforcing properties or the like.

In the present invention, for the filament constituting the cord 6 of the circumferential direction belt layer 4, a steel filament can be employed, but not limited thereto and a high tension organic fiber may be used. Examples of the high tension organic fiber include organic fibers such as polyamide (nylon (registered trademark)) and aramid fiber (Kevler (registered trademark)).

In the present invention, the wire diameter D1 of a filament constituting the cord 6 of the circumferential direction belt layer 4 and the wire diameter D2 of a filament constituting the cord 5 of the oblique steel belt layer 3 preferably satisfy the relationship represented by the following expression (1):

$$D1 < D2 \quad (1).$$

This is because, since the cord 6 of the circumferential direction belt layer 4 is composed of a plurality of filaments, the effect of the present invention can be obtained even when the wire diameter per one filament is small. Preferably the wire diameter D1 is 0.13 to 0.25 mm and the wire diameter D2 is 0.18 to 0.35 mm.

In the present invention, the interval A1 between the cords 5 of the oblique steel belt layer 4 and the interval A2 between the cords 6 of the circumferential direction belt layer 4 preferably satisfy the relationship represented by the following expression (2):

$$A1 > A2 \quad (2).$$

(See Fig. 3) This is because, in order to secure the rigidity in the circumferential direction, it is preferred that the end count of the circumferential direction belt layer 4 be high. Preferably A1 is 1.0 to 2.0 mm and A2 is 0.5 to 1.2 mm.

In the present invention, it is preferred that the inclination angle of the oblique steel belt layer 3 be 40 to 60° with respect to the circumferential direction. In cases where a complex member of unidirectionally oriented reinforcing fibers undergoes a shear deformation under a constant force into the shape of a parallelogram, the amount of shear deformation is the smallest when the angle of the reinforcing fiber is 54°. That is, when the belt angle with respect to the circumferential direction is 54°, the shrinkage of the oblique steel belt layer 3 is the smallest and the rolling resistance can be made small, and therefore, the angles in the above-mentioned range are preferred.

In the present invention, it is preferred that the width B1 of the circumferential direction belt layer 4 in the belt width direction and the width B2 of the oblique steel belt layer 3 in the belt width direction satisfy the relationship represented by the following formula (3):

$$0.8 \times B2 < B1 < 0.95 \times B2 \quad (3).$$

(See Fig. 2) This is because, in order to secure the high speed durability of the belt portion, it is preferred that the circumferential direction belt layer 4 be narrower than the oblique steel belt layer 3.

In the present invention, from the viewpoint of manufacturability, belt strength and weight reduction, the cords 5 of the oblique steel belt layer 3 is preferably 3 to 6 steel filaments.

In the present invention, it is important that the cords 5 of the oblique steel belt layer 3 be placed side by side in a belt width direction in a unit of a bundle of a plurality of parallel steel filaments and the cords 6 of the circumferential steel belt layer 4 be placed side by side in a belt width direction in a plurality of twisted filaments. Regarding the detail of the other constitutions of a tire, the tire can be appropriately constituted according to a conventional method, and not particularly limited thereto. For example, the tire illustrated in Fig. 1 is composed of the tread portion 13 and a pair of side wall portions 12 and bead portions 11 to both sides of which the tread portion 13 extends. The carcass 2 reinforces these portions over the pair of bead cores 1 individually embedded in the bead portions 11.

In the present invention, as the cord of the carcass 2, cords of a variety of organic fibers such as nylon, polyester, rayon or aromatic polyamides can be used. At least one carcass 2 is required to be placed, and two or more layers may be placed. Generally, as illustrated, the carcass 2 is turned over around the bead core 1 from the inside of the tire to the outside of the tire to be engaged.

Still further, in the tire of the present invention, a tread pattern is appropriately formed on the surface of the tread portion, and an inner liner (not illustrated) is formed on the innermost layer. Still further, in the tire of the present invention, as the gas to be filled in the tire, a normal air or an air whose oxygen partial pressure is varied or an inert gas such as nitrogen can be used.

Examples

The present invention will now be described in detail by way of Examples.

(Comparative Examples 1, 2, and Examples 1 to 4)

As illustrated in Fig. 1, a pneumatic tire provided on the periphery side of the crown portion of one-layer carcass 2 with a first belt layer 3 and a second belt layer 4 in the order mentioned with a tire size of 195/65R15 was manufactured. The detail belt structure is listed in Table 1 below. For the obtained test tire, evaluations were carried out according to the following.

<High speed durability>

Each test tire was assembled with a normal rim defined in JATMA and inflated to an inner pressure of 280 kPa, and then, the tire was pressed on a drum under an arbitrary force. The speed at which a tire trouble occurred was recorded in the case of maintaining the speed for an arbitrary time while increasing the speed of the tire stepwisely from an arbitrary circumferential speed of the drum to calculate the speed difference based on the speed at which a tire trouble occurred in the Comparative Example 1. The obtained result is listed in combination in Table 1.

<Tire weight>

By measuring the weight of individual tires, the weight difference of the tires were calculated based on the weight of the tire in Comparative Example 1. The obtained result are listed in combination in Table 1.

<Fuel efficiency>

As an index of the fuel efficiency of each test tire, how low the rolling resistance was was measured by a rolling resistance tester in accordance with SAE J 1269. Evaluation was carried out based on Comparative Example 1 as follows: the considerably excellent fuel efficiency was denoted as ◎; the excellent fuel efficiency was denoted as ○; the similar fuel efficiency was denoted as △; and the poor fuel efficiency was denoted as ×. The obtained result is listed in combination in Table 1.

<Overall evaluation>

As the overall evaluation of each test tire, an evaluation was carried out based on Comparative Example 1 as follows: considerably excellent test tire was denoted as ◎, the excellent test tire was denoted as ○; the similar test tire was denoted as △; and the poor test tire was denoted as ×. The obtained result is listed in combination in Table 1.

[Table 1]

| | Comparative Example 1 | Comparative Example 2 | Example 1 | Example 2 | Example 3 | Example 4 |
|---|---|---|---|---|---|---|
| First belt layer cord type | $1\times5$ | Monofilament | Monofilament | Monofilament | Monofilament | Monofilament |
| Second belt layer cord type | $1\times5$ | Monofilament | $1\times4$ | $1\times10$ | $1\times10$ | $1\times20$ |
| Belt reinforcing layer | Nylon capped | Nylon capped | None | None | None | None |
| First belt layer angle (°) | 28 | 28 | 28 | 28 | 50 | 50 |
| Second belt layer angle (°) | 28 | 28 | 0 | 0 | 0 | 0 |
| Filament diameter of cord of second belt layer $D_1$(mm) | 0.22 | 0.22 | 0.22 | 0.18 | 0.18 | 0.18 |
| Filament diameter of cord of first belt layer $D_2$(mm) | 0.22 | 0.22 | 0.22 | 0.22 | 0.22 | 0.22 |
| Number of bundles of cords of first belt layer (bundles) | - | 5 | 5 | 5 | 5 | 5 |
| cords interval of first belt layer $A_1$(mm) | 0.6 | 1.1 | 1.1 | 1.1 | 1.1 | 1.1 |
| cords interval of second belt layer $A_2$(mm) | 0.6 | 1.1 | 1.0 | 0.8 | 0.8 | 0.7 |
| Width of second belt layer $B_1$ (mm) | - | - | 130 | 130 | 130 | 125 |

(continued)

| | Comparative Example 1 | Comparative Example 2 | Example 1 | Example 2 | Example 3 | Example 4 |
|---|---|---|---|---|---|---|
| Width of first belt layer B2 (mm) | - | - | 145 | 145 | 145 | 145 |
| Tire weight (g) | Standard | -105 | -160 | -160 | -150 | -30 |
| High speed durability (km/h) | Standard | -20 | -10 | 0 | 0 | +10 |
| Fuel efficiency (index) | - | Δ | ○ | ○ | ◎ | ◎ |
| Overall evaluation (index) | - | × | Δ | ◎ | ◎ | ○ |

As shown in the above-described Table 1, it is found that the pneumatic tire of the present invention has a reduced weight and increase fuel efficiency, while securing durability.

Description of Symbols

1      bead core
2      carcass
3      oblique steel belt layer
4      circumferential direction belt layer
5      cord of oblique steel belt layer
6      cord of circumferential direction belt layer
7      steel filament
8      opening
10     pneumatic tire
11     bead portion
12     side wall portion
13     tread portion

## Claims

1. A pneumatic tire (10) comprising, as a skeleton, a carcass (2) extending toroidally between a pair of bead cores (1) individually embedded in a left-and-right pair of bead portions (11), and is provided with an oblique steel belt layer (3) which is arranged on the periphery side of a crown portion of the carcass (2) and in which a plurality of cords extending obliquely with respect to the tire circumferential direction are arrayed, and a circumferential direction belt layer (4) which is arranged on the periphery side of the oblique steel belt layer (3) and in which a plurality of cords are arrayed substantially in parallel with the tire circumferential direction, wherein
the cords (5) of the oblique steel belt layer (3) are placed side by side in a belt width direction in a unit of a bundle of a plurality of parallel steel filaments and the cords (6) of the circumferential belt layer (4) are placed side by side in a belt width direction in a plurality of twisted steel filaments.

2. A pneumatic tire (10) according to claim 1, wherein the wire diameter D1 of a filament constituting the cord (6) of the circumferential direction belt layer (4) and the wire diameter D2 of a steel filament constituting the cord (5) of the oblique steel belt layer (3) satisfy the relationship represented by the following expression (1):

$$D1 < D2 \quad (1).$$

3. A pneumatic tire (10) according to claim 1, wherein the cord (6) of the circumferential direction belt layer (4) is composed of 5 to 15 filaments.

4. A pneumatic tire (10) according to claim 1, wherein the interval A1 between the cords (5) of the oblique steel belt layer (3) and the interval A2 between the cords (6) of the circumferential direction belt layer (4) satisfy the relationship represented by the following expression (2):

$$A1 > A2 \quad (2).$$

5. A pneumatic tire (10) according to claim 1, wherein the inclination angle of the oblique steel belt layer (3) is 40 to 60° with respect to the circumferential direction.

6. A pneumatic tire (10) according to claim 1, wherein the width B1 of the circumferential direction belt layer (4) in the belt width direction and the width B2 of the oblique steel belt layer (3) in the belt width direction satisfy the relationship represented by the following expression (3):

$$0.8 \times B2 < B1 < 0.95 \times B2 \quad (3).$$

7. A pneumatic tire (10) according to claim 1, wherein the cord (5) ofthe oblique steel belt layer (3) is composed of 3 to 6 steel filaments.

**Patentansprüche**

1. Luftreifen (10), der, als ein Skelett, eine Karkasse (2) umfasst, die sich kreisringförmig zwischen einem Paar von Wulstkernen (1), die einzeln in einem Paar von linken und rechten Wulstabschnitten (11) eingebettet sind, erstreckt und versehen ist mit einer schrägen Stahlgürtellage (3), die auf der Randseite eines Scheitelabschnitts der Karkasse (2) angeordnet ist und in der mehrere Kords, die sich schräg in Bezug auf die Reifenumfangsrichtung erstrecken, angeordnet sind, und einer Umfangsrichtungsgürtellage (4), die auf der Randseite der schrägen Stahlgürtellage (3) angeordnet ist und in der mehrere Kords im Wesentlichen parallel zu der Reifenumfangsrichtung angeordnet sind, wobei die Kords (5) der schrägen Stahlgürtellage (3) in einer Gürtelbreitenrichtung nebeneinander in einer Einheit eines Bündels von mehreren parallelen Stahlfäden angeordnet sind und die Kords (6) der Umfangsgürtellage (4) in einer Gürtelbreitenrichtung nebeneinander in mehreren verdrillten Stahlfäden angeordnet sind.

2. Luftreifen (10) nach Anspruch 1, wobei der Drahtdurchmesser D1 eines Fadens, der den Kord (6) der Umfangsrichtungsgürtellage (4) ausmacht, und der Drahtdurchmesser D2 eines Fadens, der den Kord (5) der schrägen Stahlgürtellage (3) ausmacht, die Beziehung erfüllen, die durch den folgenden Ausdruck (1) dargestellt wird:

$$D1 < D2 \quad (1).$$

3. Luftreifen (10) nach Anspruch 1, wobei der Kord (6) der Umfangsrichtungsgürtellage (4) aus 5 bis 15 Fäden besteht.

4. Luftreifen (10) nach Anspruch 1, wobei der Abstand A1 zwischen den Kords (5) der schrägen Stahlgürtellage (3) und der Abstand A2 zwischen den Kords (6) der Umfangsrichtungsgürtellage (4) die Beziehung erfüllen, die durch den folgenden Ausdruck (2) dargestellt wird:

$$A1 > A2 \ (2).$$

**5.** Luftreifen (10) nach Anspruch 1, wobei ein Neigungswinkel der schrägen Stahlgürtellage (3) 40 bis 60° in Bezug auf die Umfangsrichtung beträgt.

**6.** Luftreifen (10) nach Anspruch 1, wobei die Breite B1 der Umfangsrichtungsgürtellage (4) in der Gürtelbreitenrichtung und die Breite B2 der schrägen Stahlgürtellage (3) in der Gürtelbreitenrichtung die Beziehung erfüllen, die durch den folgenden Ausdruck (3) dargestellt wird:

$$0,8 \times B2 < B1 < 0,95 \times B2 \ (3).$$

**7.** Luftreifen (10) nach Anspruch 1, wobei der Kord (5) der schrägen Stahlgürtellage (3) aus 3 bis 6 Stahlfäden besteht.

**Revendications**

**1.** Bandage pneumatique (10), comprenant comme squelette une carcasse (2) s'étendant toroïdalement entre une paire de tringles (1) noyées individuellement dans une paire de parties de talon de gauche et de droite (11), et comportant une couche de ceinture en acier oblique (3) agencée sur le côté périphérique d'une partie de sommet de la carcasse (2), et dans laquelle sont disposés plusieurs câbles s'étendant de manière oblique par rapport à la direction circonférentielle du bandage pneumatique, et une couche de ceinture circonférentielle (4) agencée sur le côté périphérique de la couche de ceinture en acier oblique (3) et dans laquelle plusieurs câbles sont disposés de manière sensiblement parallèle à la direction circonférentielle du bandage pneumatique, dans lequel :

les câbles (5) de la couche de ceinture en acier oblique (3) sont placés côte à côte dans une direction de la largeur de la ceinture, dans une unité d'un faisceau de plusieurs filaments d'acier parallèles, les câbles (6) de la couche de ceinture circonférentielle (4) étant placés côte à côte dans une direction de la largeur de la ceinture, dans plusieurs filaments d'acier torsadés.

**2.** Bandage pneumatique (10) selon la revendication 1, dans lequel le diamètre de fil D1 d'un filament constituant le câble (6) de la couche de ceinture circonférentielle (4) et le diamètre de fil D2 d'un filament d'acier constituant le câble (5) de la couche de ceinture en acier oblique (3) satisfont la relation représentée par l'expression (1) ci-dessous:

$$D1 < D2 \ (1).$$

**3.** Bandage pneumatique (10) selon la revendication 1, dans lequel le câble (6) de la couche de ceinture dans la direction circonférentielle (4) est composé de 5 à 15 filaments.

**4.** Bandage pneumatique (10) selon la revendication 1, dans lequel l'intervalle A1 entre les câbles (5) de la couche de ceinture en acier oblique (3) et l'intervalle A2 entre les câbles (6) de la couche de ceinture dans la direction circonférentielle (4) satisfont la relation représentée par l'expression (2) ci-dessous:

$$A1 > A2 \ (2).$$

**5.** Bandage pneumatique (10) selon la revendication 1, dans lequel l'angle d'inclinaison de la couche de ceinture en acier oblique (3) est compris entre 40 et 60° par rapport à la direction circonférentielle.

**6.** Bandage pneumatique (10) selon la revendication 1, dans lequel la largeur B1 de la couche de ceinture dans la direction circonférentielle (4), dans la direction de la largeur de la ceinture, et la largeur B2 de la couche de ceinture en acier oblique (3), dans la direction de la largeur de la ceinture, satisfont la relation représentée par l'expression (3) ci-dessous:

$$0,8 \text{ x } B2 < B1 < 0,95 \text{ x } B2 \text{ (3)}.$$

**7.** Bandage pneumatique (10) selon la revendication 1, dans lequel le câble (5) de la couche de ceinture en acier oblique (3) est composé de 3 à 6 filaments d'acier.

EP 2 537 686 B1

Fig. 1

10

3

4

13

12

2

11

1

Fig. 2

CL

B2

B1

4

3

2

12

EP 2 537 686 B1

Fig. 3

A2   D1   D3

6

5

4

3

A1

D2

2

Fig. 4

6

α

D3

D1

7

8

13

EP 2 537 686 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002019414 A
- JP 3071808 B
- JP 4078602 A
- JP 2001206010 A
- JP 4054072 B
- JP 8318706 A
- JP 2007161026 A
- JP 2713806 B
- JP 4095505 A
- JP 2002283809 A
- JP 2005349999 A
- JP 2007302203 A
- US 6609552 B2